Europäisches Patentamt

European Patent Office

Office européen des brevets

(11) Veröffentlichungsnummer: **0 057 470**
**B1**

(12) **EUROPÄISCHE PATENTSCHRIFT**

(45) Veröffentlichungstag der Patentschrift:
**12.09.84**

(51) Int. Cl.³: **C 08 L 27/06** // (C08L27/06, C08K5/12)

(21) Anmeldenummer: **82100764.8**

(22) Anmeldetag: **03.02.82**

(54) Weichmacher für, gegebenenfalls modifiziertes, Polyvinylchlorid, ihre Verwendung und diese enthaltende von -50 bis +105 Grad C temperaturbeständige weichmacherhaltige Folien und Überzugsmaterialien auf Polyvinylchloridbasis.

(30) Priorität: **03.02.81 HU 24781**

(43) Veröffentlichungstag der Anmeldung:
**11.08.82 Patentblatt 82/32**

(45) Bekanntmachung des Hinweises auf die Patenterteilung:
**12.09.84 Patentblatt 84/37**

(84) Benannte Vertragsstaaten:
**AT DE FR GB**

(56) Entgegenhaltungen:
**US - A - 3 094 503**
**US - A - 3 842 027**

**CHEMICAL ABSTRACTS, Band 75, Nr. 24, 13th December 1971, Seite 24, Nr. 141519m, Columbus, Ohio, USA, Z.S. MOISEEVA et al.: "New plasticizers of improved quality for products made from synthetic leather and poly(vinyl chloride) films"**

**Die Akte enthält technische Angaben, die nach dem Eingang der Anmeldung eingereicht wurden und die nicht in dieser Patentschrift enthalten sind.**

(73) Patentinhaber: **MüANYAGIPARI KUTATO INTEZET, Hungária körut 114, Budapest XIV (HU)**
Patentinhaber: **HUNGARIA MUANYAGFELDOLGOZO VALLALAT, Nagytetenyi ut 216/218, Budapest XXII (HU)**

(72) Erfinder: **Déri, Miklós, Dr. Dipl. Ing., Istvánteleki u. 35, H-1045 Budapest (HU)**
Erfinder: **Pazonyi, Tamás, Dr. Dipl. Ing., Hattyu u. 3/b, H-1015 Budapest (HU)**
Erfinder: **Hauser, Jenö, Dipl. Ing., Horog u. 1, H-1107 Budapest (HU)**
Erfinder: **Venczel, Tibor, Dipl. Ing., Szováta u. 3, H-1115 Budapest (HU)**
Erfinder: **Doór, Ervin, Dr. Dipl. Ing., Vöröstorony u. 11/b, H-1025 Budapest (HU)**
Erfinder: **Olajos, Dezsö, Dipl. Ing., Dámvad u. 25, H-1029 Budapest (HU)**
Erfinder: **Pongrácz, Károly, Ing., Nefelejcs u. 22, H-1078 Budapest (HU)**

(74) Vertreter: **Beszédes, Stephan G. Dr., Münchener Strasse 80a Postfach 1168, D-8060 Dachau (DE)**

## Beschreibung

Die Erfindung betrifft Weichmacher für, gegebenenfalls modifiziertes, Polyvinylchlorid, ihre Verwendung und diese enthaltende von −50 bis +105° C, also in einem breiten Temperaturbereich, temperaturbeständige weichmacherhaltige Folien und Überzugsmaterialien auf Polyvinylchloridbasis.

Es ist bekannt, dass weichmacherhaltiges Polyvinylchlorid nur innerhalb beschränkter Temperaturgrenzen beständig ist und seine Eigenschaften bewahrt. Eine unter Verwendung von 100 Gew.-Teilen Polyvinylchlorid und 48 Gew.-Teilen Dioctylphthalat gefertigte Folie, deren Zerreissfestigkeit 16 N/mm² und Zerreissdehnung 250% beträgt, hat nach 2×24 Stunden langer Lagerung bei 135° C nur noch eine Zerreissdehnung von 20%. Die Kaltbiegetemperatur der Folie beträgt im ursprünglichen Zustand −6° C, nach der erwähnten Wärmebehandlung jedoch nur noch +6° C (gemäss Prüfverfahren entsprechend den ungarischen Normen).

Zur Erhöhung der Wärmebeständigkeit weichmacherhaltiger Polyvinylchloridfolien wurden zahlreiche Versuche unternommen. Die Qualitätsvorschriften für Kabelmäntel schreiben zum Beispiel vor, dass nach 7×24 Stunden langer Lagerung bei 135° C beziehungsweise 10×24 Stunden langer Lagerung bei 120° C die Zerreissdehnung um höchstens 20% absinken darf. Diese Anforderung kann gegenwärtig nur mit Trimellithaten als Weichmacher erfüllt werden. So wird zum Beispiel Tri-(2-äthylhexyl)-trimellithat (unter der Bezeichnung Bisflex TOT" von der Firma BP Chemicals und unter der Bezeichnung Edenol W 310" von der Firma Henkel) als Weichmacher empfohlen. (Ein ähnliches Produkt mit der Bezeichnung Scadoplast 525" der Firma SCADO ist ebenfalls handelsüblich.) Mit diesen Weichmachern kann jedoch nur eine mässige Kältebeständigkeit (bis −26° C) erreicht werden.

Ein mässig wärmebeständiges und zwar bis 80° C verwendbares Produkt kann durch Verwendung von Ditridecylphthalat oder Diisotridecylphthalat als Weichmacher erreicht werden. So betrifft die US-Patentschrift Nr. 3842027 das Weichmachen von Vinylchlorid/Vinylacetat/Maleinsäure-Terpolymeren mit Ditridecylphthalat. Die mit diesen Weichmachern hergestellten Produkte verlieren jedoch während einer 7tägigen Wärmebehandlung bei 135° C 6,9% ihres Gewichtes, während für Trimellithate dieser Wert nur bei 2,6% liegt. Auch haben diese Weichmacher den grossen Nachteil, dass die mit ihnen hergestellten Produkte nur eine verhältnismässig schlechte Kältebeständigkeit aufweisen.

Auch zur Erhöhung der Kältebeständigkeit von weichmacherhaltigem Polyvinylchlorid wurden zahlreiche Wege beschritten. Eine Kältebeständigkeit bis −50° C beziehungsweise −55° C kann durch den Zusatz von Dioctyladipat (zum Beispiel Edenol 133" beziehungsweise Bisoflex DOA"), Dioctylsebacat (zum Beispiel Edenol 888") beziehungsweise Alfol$_{6 \text{ bis } 10 \text{ C}}$"-phthalaten (zum Beispiel Eviplast 610" von der Firma Egyesült Vegyimüvek, Budapest, Ungarn) (vergleiche auch US-Patentschrift Nr. 3094503 und Chemical Abstracts, Vol. 75, 1971, Nr. 24, Seite 24, Referat 141519m) erzielt werden. Die mit diesen Weichmachern erhaltenen Produkte haben jedoch den Nachteil der geringen Wärmebeständigkeit. Nach 2tägiger Lagerung bei 120° C beträgt ihre Kaltbiegetemperatur nur noch 8° C und nach 7tägiger Lagerung bei 135° C ist das Material so spröde, dass die Messung nicht mehr vorgenommen werden kann.

Der Erfindung liegt daher die Aufgabe zugrunde, Weichmacher für, gegebenenfalls modifiziertes, Polyvinylchlorid, durch welche das letztere bei Dauereinwirkung von Temperaturen von −50 bis +105° C seine Eigenschaften nicht verändert, wobei es sowohl nach 10×24 Stunden langer Wärmebehandlung bei 120° C den Anforderungen der einschlägigen Vorschriften (ungarische Norm MSZ 1176/1-76) entspricht, als auch die Kaltbiegeprüfung (ungarische Norm MSZ 2257/2) besteht, sowie ihre Verwendung und diese enthaltende von −50 bis +105° C temperaturbeständige weichmacherhaltige Folien und Überzugsmaterialien auf Polyvinylchloridbasis zu schaffen.

Das Obige wurde überraschenderweise durch die Erfindung erreicht.

Die Erfindung beruht auf der überraschenden Feststellung, dass durch Weichmacher aus einem Gemisch aus Phthalaten von Oxosynthesealkoholen mit 6 bis 10 Kohlenstoffatomen und Ditridecylphthalat und/oder Diisotridecylphthalat Polyvinylchloridprodukte, welche für dauernde Betriebstemperaturen von −50 bis +105° C geeignet sind, erzielt werden.

Dies ist vor allem deswegen überraschend, weil die Alfol$_{6 \text{ bis } 10 \text{ C}}$"-phthalate (Alfolphthalate) als Weichmacher zwar eine gute Kältebeständigkeit gewährleisten, die mit diesen Weichmachern hergestellten Produkte jedoch nur eine geringe Wärmebeständigkeit aufweisen, während mit dem nur eine mittelmässige Wärmefestigkeit (80° C) verleihenden Weichmacher Ditridecylphthalat oder Diisotridecylphthalat in Abhängigkeit von der Konzentration Kältebeständigkeiten von höchstens −20 bis −30° C erreicht werden. Durch Verwendung der beiden Weichmacher in entsprechenden Mischungsverhältnissen können jedoch gegenüber dem Stand der Technik einschliesslich der US-Patentschriften Nrn. 3842027 und 3094503 und Chemical Abstracts, Vol. 75, 1971, Nr. 24, Seite 24, Referat 141519m überraschenderweise Produkte, deren Kältebeständigkeit (bis −50° C) und Wärmebeständigkeit (bis +105° C) die entsprechenden Parameter der nur mit einem der beiden Weichmacher hergestellten Produkte weit übertreffen, erhalten werden. Die beiden Weichmacher üben zusammen intramolekular eine synergistische Wirkung aus, die bisher nicht bekannt war. Nach den im Fachschrifttum bisher veröffentlichten Angaben setzt sich die Wirkung von Weichmachergemischen dem Mischungsverhältnis entsprechend additiv aus den Eigenschaften der Bestandteile zusammen. Die Additivität der Ei-

genschaften in Weichmachergemischen ist beispielsweise in der „Encyclopedia of PVC" (M. Decker Inc., New York 1976, Kapitel 10, Seite 452) dargelegt. Die gleiche Ansicht wurde auch auf dem 37. SPE-Kongress (im Mai 1979 in New Orleans, Louisiana) vertreten, wo von D. H. Paul (Mosanto Ind. Chem. Co.) über den linearen Zusammenhang, die Additivität der in Weichmachergemischen messbaren Eigenschaften berichtet wurde. Synergistisch im Sinne der Erzielung sowohl einer hohen Wärmebeständigkeit als auch einer hohen Kältebeständigkeit wirkende Weichmachergemische und mit solchen Gemischen hergestelltes Polyvinylchlorid waren also noch nicht bekannt.

Gegenstand der Erfindung sind daher Weichmacher für, gegebenenfalls modifiziertes, Polyvinylchlorid mit einem Gehalt an Phthalaten (Phthalsäureestern) von Oxosynthesealkoholen, welche dadurch gekennzeichnet sind, dass sie

ausser a) 1 oder mehr Phthalat(en) von Oxosynthesealkoholen mit 6 bis 10 Kohlenstoffatomen

auch b) Ditridecylphthalat und/oder Diisotridecylphthalat

im Gemisch miteinander in Gewichtsverhältnissen von a) zu b) von 5:95 bis 95:5, gegebenenfalls zusammen mit 1 oder mehr anderen Weichmacher(n), enthalten.

Der Begriff „Phthalate von oxosynthesealkoholen mit 6 bis 10 Kohlenstoffatomen" umfasst auch solche mit einem Gehalt an Verunreinigungen, vor allem $C_4$- und/oder $C_{12}$-Alkoholen, in geringen Mengen.

Vorzugsweise enthalten die erfindungsgemässen Weichmacher als Phthalat(e) von Oxosynthesealkoholen mit 6 bis 10 Kohlenstoffatomen [Bestandteil a)] ein solches, beziehungsweise solche, von primären Oxosynthesealkoholen mit gerader oder weitgehend überwiegend gerader Kette und gerader Kohlenstoffatomzahl, insbesondere 1 oder mehr Alfol$_{6 \text{ bis } 10 \text{ C}}$ "-phthalat(e). Bei den letzteren handelt es sich um Phthalsäureester von Alkoholgemischen, deren Alkohole mittels Oxosynthese hergestellt worden sind. Ein solches Produkt ist das Alfol" 610-phthalat (der Firma Condea Petrochemie GmbH, Hamburg), das sich von einem Oxosynthesealkoholgemisch der folgenden Zusammensetzung ableitet:

44 Gew.-% $C_{10}$-Alkohol
35 Gew.-% $C_8$-Alkohol
20 Gew.-% $C_6$-Alkohol
 1 Gew.-% Verunreinigungen (vor allem $C_4$- und $C_{12}$-Alkohole)

Weitere Beispiele sind die nach Ullmanns Enzyklopädie der technischen Chemie, Ergänzungsband, Seiten 91 bis 94 erhaltenen weiteren Produkte wie die durch das Verfahren der deutschen Auslegeschrift Nr. 1224740 mit anschliessender Hydrolyse und, soweit Alkohole mit von 6 bis 10 verschiedener Kohlenstoffatomzahl anfallen, deren Entfernung hergestellten.

Es ist auch bevorzugt, dass das Gewichtsverhältnis von a) zu b) 60:40 bis 70:30 oder 40:60 bis 20:80 ist. Hinsichtlich der Erreichung des besten Synergismus die Zerreissdehnung betreffend zeichnet sich vom letztgenannten Bereich der Gewichtsverhältnisse von a) zu b) im ursprünglichen Zustand der speziellere Bereich von 30:70 bis 20:80 und nach der Hitzealterung (Wärmebeständigkeit) der speziellere Bereich von 40:60 bis 30:70 als besonders vorteilhaft aus. Hinsichtlich der Erreichung des besten Synergismus die Kältebeständigkeit (Kaltbiegetemperatur) betreffend ist der Bereich der Gewichtsverhältnisse von a) zu b) von 60:40 bis 70:30 besonders vorteilhaft.

Vorteilhaft enthalten die erfindungsgemässen Weichmacher als anderen Weichmacher Diisooctylphthalat.

Gegenstand der Erfindung ist auch die Verwendung der erfindungsgemässen Weichmacher zur Herstellung von von −50 bis +105° C temperaturbeständigen weichmacherhaltigen Folien und Überzugsmaterialien auf Polyvinylchloridbasis durch Zugabe von 1 oder mehr der ersteren, gegebenenfalls neben 1 oder mehr anderen Weichmacher(n), zu, gegebenenfalls modifiziertem, Polyvinylchlorid.

Vorteilhaft wird beziehungsweise werden bei der erfindungsgemässen Verwendung der beziehungsweise die Weichmacher zum, gegebenenfalls modifizierten, Polyvinylchlorid in Mengen von insgesamt 15 bis 55 Gew.-% zugegeben.

Als anderer Weichmacher neben dem beziehungsweise den erfindungsgemässen Weichmacher(n) kann vorteilhaft Diisooctylphthalat eingesetzt werden.

Vorteilhaft kann als modifiziertes Polyvinylchlorid ein solches, welches mit Polychloräthylen (chloriertem Polyäthylen) modifiziert ist, eingesetzt werden.

Ferner sind Gegenstand der Erfindung von −50 bis +150° C temperaturbeständige weichmacherhaltige Folien und Überzugsmaterialien auf Polyvinylchloridbasis, welche durch einen Gehalt an 1 oder mehr erfindungsgemässen Weichmacher(n), vorteilhaft in Mengen von insgesamt 15 bis 55 Gew.-%, gekennzeichnet sind.

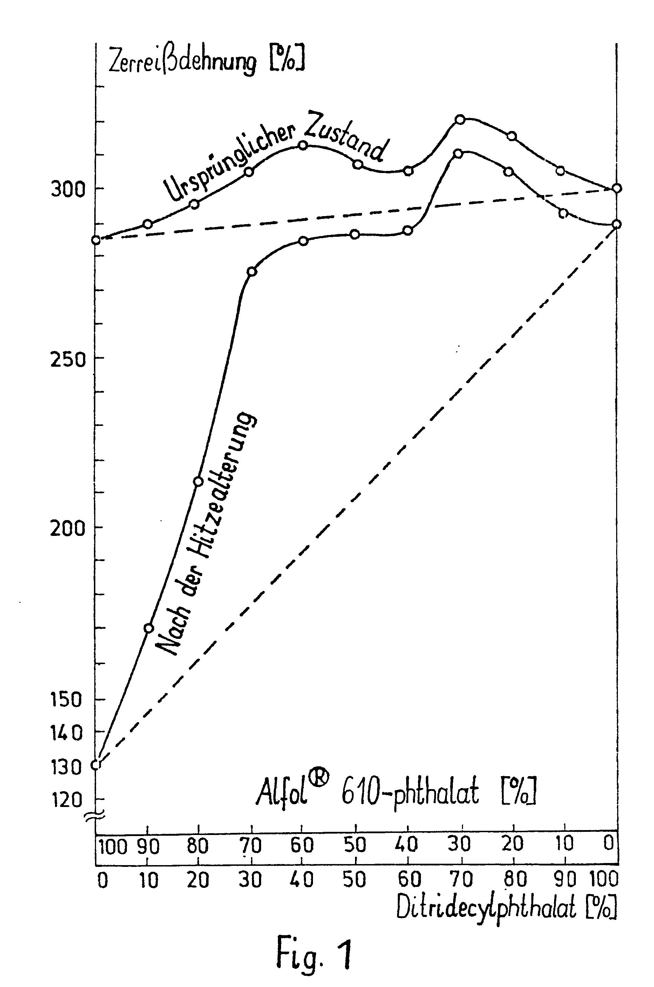

In der Figur 1 sind die Zerreissdehnungseigenschaften einer insgesamt 30 Gew.-% Weichmacher enthaltenden Polyvinylchloridfolie für verschiedene Mischungsverhältnisse der beiden Weichmacherbestandteile Alfol" 610-phthalat und Ditridecylphthalat [DTDP] eines erfindungsgemässen Weichmachers beziehungsweise für diese allein dargestellt. Aus dieser geht hervor, dass für das erfindungsgemässe Weichmachergemisch die gemessenen Werte der Zerreissdehnung (in der Figur 1 ausgezogene Kurven) bei jeder Zusammensetzung über den rechnerisch ermittelten additiven Werten (in der Figur 1 gestrichelte Linien) liegen. Dies trifft besonders ausgeprägt für die Werte nach der Wärmebelastung (Hitzealterung) zu.

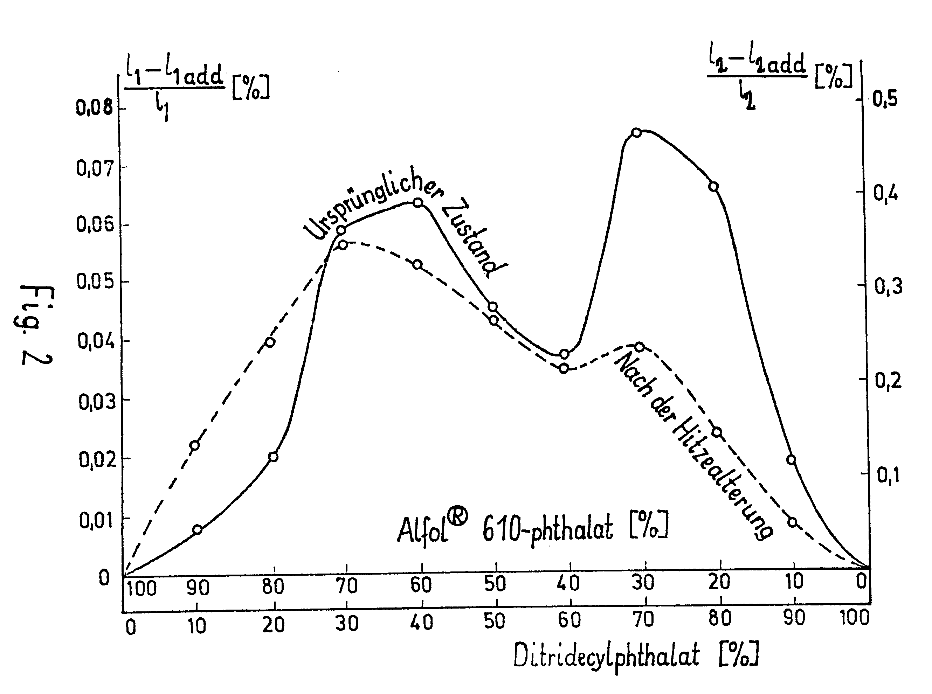

In der Figur 2 ist das Verhältnis der gemessenen und der berechneten Werte der Zerreissdehnung als Funktion der Weichmacherzusammensetzung graphisch aufgetragen. Das Verhältnis der gemessenen und der berechneten Werte der Zerreissdehnung im ursprünglichen Zustand (in der Figur 2 ausgezogene Kurve) beziehungsweise das Verhältnis der gemessenen und der berechneten Werte der Zerreissdehnung nach der Hitzealterung (in der Figur 2 gestrichelte Kurve) ergeben sich aus der folgenden Beziehung

$$\frac{l_1 - l_{1add}}{l_1} \text{ ursprünglicher Zustand (ausgezogene Linie),}$$

$$\frac{l_2 - l_{2add}}{l_2} \text{ nach der Hitzealterung (gestrichelte Linie),}$$

worin

$l_1$ die im ursprünglichen Zustand gemessene Zerreissdehnung ist,

$l_{1add}$ die im ursprünglichen Zustand berechnete (additive) Zerreissdehnung bedeutet,

$l_2$ die nach der Hitzealterung gemessene Zerreissdehnung ist, und

$l_{2\ add}$ die nach der Hitzealterung berechnete (additive) Zerreissdehnung bedeutet.

Die Messergebnisse, insbesondere an Hand der Figur 2, zeigen auch, dass die Zerreissdehungseigenschaften von 30 bis 40 Gew.-% beziehungsweise 70 bis 80 Gew.-% (im ursprünglichen Zustand) beziehungsweise 60 bis 70 Gew.-% (nach der Hitzealterung) Ditridecylphthalat enthaltenden erfindungsgemässen Weichmachern besonders günstig sind.

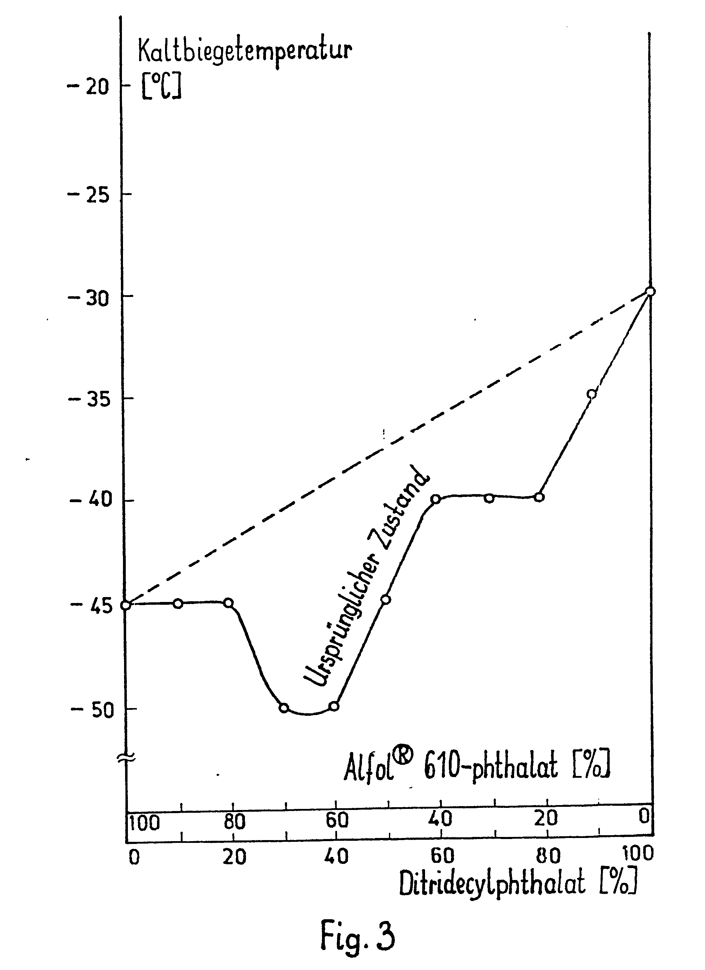

In der Figur 3 sind die Kaltbiegeeigenschaften derselben erfindungsgemässen Weichmacher dargestellt. Aus dieser geht hervor, dass die gemessenen Werte der Kaltbiegetemperatur (in der Figur 3 ausgezogene Kurve) immer unter den berechneten additiven Werten (in der Figur 3 gestrichelte Linie) liegen. Vor allem Verhältnisse von Alfol' 610-phthalat zu Ditridecylphthalat von 60:40 bis 70:30, wie 70:30, sind vorteilhaft. Die erfindungsgemässen Weichmacher sind also auch zur Herstellung von kältebeständigem Polyvinylchlorid hervorragend geeignet.

Analoge Ergebnisse wurden mit Diisotridecylphthalat an Stelle des Ditridecylphthalates erhalten.

Unter Ausnutzung der überraschenden Vorteile der erfindungsgemässen Weichmacher können mit ihnen weichmacherhaltige Polyvinylchloridfolien und -überzüge für Kabel, die über einen grossen Temperaturbereich verwendbar sind, hergestellt werden.

Die Erfindung wird an Hand der folgenden Beispiele näher erläutert.

*Beispiel 1*

Zur Herstellung einer Isolierfolie für den Korrosionsschutz von Metallrohren wurde ein Gemisch der folgenden Zusammensetzung bereitet:

67 Gew.-Teile Suspensionspolyvinylchlorid (K-Wert=70)

18 Gew.-Teile Alfol' 610-phthalat') (der Firma Condea Petrochemie GmbH, Hamburg)

10 Gew.-Teile Ditridecylphthalat

5 Gew.-Teile oberflächenbehandelte Kreide (Omya BSH', Plüss-Stauffer, Schweiz)

1,5 Gew.-Teile Barium/Cadmium-Stabilisator

1,0 Gew.-Teil epoxydiertes Sojaöl

1,0 Gew.-Teil Bariumstearat

0,025 Gew.-Teil Antioxydationszusatz (Irganox-1010', Ciba-Geigy, Basel, Schweiz)

2,0 Gew.-Teile Bakterizid (Mikro-Check 11 D', Ferro Chem. Corp. Bedford, Ohio, USA)

0,5 Gew.-Teil Gasruss

') Es leitet sich von einem durch Oxosynthese erhaltenen Alkoholgemisch (Oxosynthesealkoholgemisch) der folgenden Zusammensetzung ab:

44 Gew.-% $C_{10}$-Alkohol

35 Gew.-% $C_8$-Alkohol

20 Gew.-% $C_6$-Alkohol

1 Gew.-% Verunreinigungen (vor allem $C_4$- und $C_{12}$-Alkohole)

Daraus ist das Alfol' 610-phthalat durch Verestern mit Phthalsäureanhydrid erhalten worden.

Dieses Gemisch wurde in einem Schnellmischer bis zum Erreichen einer Endtemperatur von 85° C homogenisiert und dann mittels einer Strangpresse oder einer ähnlichen Vorrichtung bei 140 bis 150° C vorgeliert. Dann wurde das Material einem auf 165 bis 168° C aufgeheizten Walzenstuhl zugeführt, von welchem das weiter gelierende Material als kontinuierliches Band einem Mehrwalzenkalander zugeführt wurde, in welchem es zu einer Folie gezogen wurde. Am Kalander wurden folgende Parameter eingehalten:

|  | Temperatur | Umfangsgeschwindigkeit |
|---|---|---|
| Walze I | 168° C | 1,0 m/Minute |
| Walze II | 178° C | 1,5 m/Minute |
| Walze III | 180° C | 2,0 m/Minute |
| Walze IV | 165° C | 2,5 m/Minute |
| Abziehgeschwindigkeit |  | 2,5 m/Minute |

*Beispiel 2*

Zur Herstellung einer für den Korrosionsschutz von Metallteilen vorgesehenen Folie wurde ein Gemisch aus den folgenden Bestandteilen bereitet:

62,0 Gew.-Teile Suspensionspolyvinylchlorid (K-Wert=70)

27,0 Gew.-Teile Alfol' 610-phthalat (wie im Beispiel 1)

3,0 Gew.-Teile Ditridecylphthalat

8,0 Gew.-Teile Kreide

1,5 Gew.-Teile Barium/Cadmium-Stabilisator 0,5 Gew.-Teil epoxydiertes Sojaöl

0,5 Gew.-Teil Calciumstearat

0,2 Gew.-Teil Stearin

0,025 Gew.-Teil Antioxydationszusatz (wie im Beispiel 1)

1,0 Gew.-Teil Titandioxyd (Rutil)

0,5 Gew.-Teil Bakterizid (wie im Beispiel 1)

Dieses Gemisch wurde in einem Schnellmischer bis zum Erreichen einer Endtemperatur von 80° C homogenisiert und dann bei 140 bis 150° C in einer Strangpresse vorgeliert. Dann wurde das Material einem bei 160 bis 165° C arbeitenden Walzenstuhl und von diesem kontinuierlich einem Mehrwalzenkalander zugeführt. Die Kalanderwalzen hatten (der Reihe nach) Temperaturen von 165, 175, 180 beziehungsweise 165° C und ihre Umfangsgeschwindigkeiten und die Abzugsgeschwindigkeit waren die gleichen wie im Beispiel 1.

*Beispiel 3*

Zur Herstellung einer Schutzfolie für den Korrosionsschutz von Metallrohren wurde ein Gemisch der folgenden Zusammensetzung bereitet:

60,0 Gew.-Teile Suspensionspolyvinylchlorid (K-Wert=70)
20,0 Gew.-Teile Diisooctylphthalat
2,0 Gew.-Teile Alfol" 610-phthalat
(wie im Beispiel 1)
8,0 Gew.-Teile Ditridecylphthalat
10,0 Gew.-Teile Kreide
1,0 Gew.-Teil Barium/Cadmium-Stabilisator
0,5 Gew.-Teil epoxydiertes Sojaöl
0,5 Gew.-Teil Calciumstearat
0,1 Gew.-Teil Stearin
0,025 Gew.-Teil Antioxydationszusatz
(wie im Beispiel 1)
0,5 Gew.-Teil Titanoxyd (Rutil)
0,5 Gew.-Teil Bakterizid (wie im Beispiel 1)

Die Verarbeitung des Gemisches erfolgte in der im Beispiel 1 beschriebenen Weise, jedoch mit dem Unterschied, dass die Temperatur des Speisewalzenstuhles 165 bis 170° C betrug und die Kalanderwalzen (der Reihe nach) Temperaturen von 170, 178, 180 beziehungsweise 165° C aufwiesen.

*Beispiel 4*

Zur Herstellung einer im Bauwesen als Isolation gegen Feuchtigkeit verwendbaren Folie wurde ein Gemisch der folgenden Zusammensetzung bereitet:

60,0 Gew.-Teile Suspensionspolyvinylchlorid (K-Wert=64)
20,0 Gew.-Teile Polychloräthylen
14,0 Gew.-Teile Alfol" 610-phthalat
(wie im Beispiel 1)
6,0 Gew.-Teile Ditridecylphthalat
1,5 Gew.-Teile Barium/Cadmium-Stabilisator
3,0 Gew.-Teile epoxydiertes Sojaöl
1,0 Gew.-Teil Glycerinmonostearat
0,1 Gew.-Teil Stearin
0,5 Gew.-Teil Titandioxyd (Rutil)
0,006 Gew.-Teil Gasruss

Dieses Gemisch wurde in einem Schnellmischer bei 90° C homogenisiert und dann in einer Strangpresse bei 150 bis 170° C vorgeliert. Von dieser wurde das Material einem bei 170 bis 175° C arbeitenden Speisewalzwerk und von diesem kontinuierlich einem Mehrwalzenkalander zugeführt, in welch letzterem unter Einhalten der folgenden Parameter eine Folie gezogen wurde.

| | Temperatur | Umfangsgeschwindigkeit |
|---|---|---|
| Walze I | 180° C | 1,2 m/Minute |
| Walze II | 190° C | 1,4 m/Minute |
| Walze III | 186° C | 1,8 m/Minute |
| Walze IV | 175° C | 2,2 m/Minute |
| Abziehgeschwindigkeit | | 2,2 m/Minute |

*Beispiel 5*

Für einen wärme- und frostbeständigen Kabelüberzug wurde ein Gemisch der folgenden Zusammensetzung bereitet:

65,0 Gew.-Teile Suspensionspolyvinylchlorid (K-Wert=74)
9,0 Gew.-Teile Alfol" 610-phthalat
(wie im Beispiel 1)
21,0 Gew.-Teile Ditridecylphthalat
5,0 Gew.-Teile oberflächenbehandelte Kreide (Omya-EX-H-1")
3,0 Gew.-Teile dibasisches Bleiphthalat
1,0 Gew.-Teil dibasisches Bleistearat
0,1 Gew.-Teil Polyäthylenwachs
0,25 Gew.-Teil Antioxydationszusatz
(wie im Beispiel 1)
0,5 Gew.-Teil Titandioxyd (Rutil)

Dieses Gemisch wurde in einem Schnellmischer bis zum Erreichen einer Endtemperatur von 90° C homogenisiert, und aus dem erhaltenen trockenen Gemisch wurde in einer in der Kabelindustrie üblichen Strangpresse unter Einhalten der folgenden Parameter ein Kabelisolierüberzug stranggepresst.

Zonentemperaturen der
Strangpresse:          150° C, 160° C, 170° C, 180° C, 190° C.
Kopftemperatur:          195° C.
Schneckendrehzahl:      25 Minuten[-1].

*Beispiel 6*

Zur Herstellung von spritzgegossenen Eckprofilen für zum Dachisolieren verwendete Deckfolien wurde ein Gemisch der folgenden Zusammensetzung bereitet:

70,0 Gew.-Teile Suspensionspolyvinylchlorid (K-Wert=64)
24,0 Gew.-Teile Alfol" 610-phthalat
(wie im Beispiel 1)
6,0 Gew.-Teile Ditridecylphthalat
1,5 Gew.-Teile Barium/Cadmium-Stabilisator
(Irgastab BC 26", Ciba-Geigy, Basel, Schweiz)
0,5 Gew.-Teil Chelatbildner (Irgastab CH 300", Ciba-Geigy, Basel, Schweiz)
1,0 Gew.-Teil epoxydiertes Sojaöl
0,5 Gew.-Teil Calciumstearat
0,2 Gew.-Teil Stearin
1,0 Gew.-Teil Titandioxyd (Rutil)
0,05 Gew.-Teil 2-Hydroxy-4-(n-octyloxy)-benzophenon
0,06 Gew.-Teil Gasruss Dieses Gemisch wurde bis zum Erreichen einer Endtemperatur von 90° C homogenisiert, dann einer Granulierstrangpresse zugeführt und unter Einhalten der folgenden Parameter granuliert:

Zonentemperaturen der
Strangpresse:          130° C, 140° C, 150° C, 170° C, 160° C.
Schneckendrehzahl:    30 Minuten[-1].

Aus dem Granulat werden durch das Spritzgiessverfahren bei 180 bis 190° C Eckprofile für die Dachisolation hergestellt.

Analoge Produkte wurden beim Ersatz des Ditridecylphthalates in den obigen Beispielen durch Diisotridecylphthalat bei in sonstiger Hinsicht gleichem Arbeiten erhalten.

## Patentansprüche

1. Weichmacher für, gegebenenfalls modifiziertes, Polyvinylchlorid mit einem Gehalt an Phthalaten von Oxosynthesealkoholen, dadurch gekennzeichnet, dass sie

ausser a) 1 oder mehr Phthalat(en) von Oxosynthesealkoholen mit 6 bis 10 Kohlenstoffatomen

auch b) Ditridecylphthalat und/oder Diisotridecylphthalat

im Gemisch miteinander in Gewichtsverhältnissen von a) zu b) von 5:95 bis 95:5, gegebenenfalls zusammen mit 1 oder mehr anderen Weichmacher(n), enthalten.

2. Weichmacher nach Anspruch 1, dadurch gekennzeichnet, dass sie als Phthalat(e) von Oxosynthesealkoholen mit 6 bis 10 Kohlenstoffatomen [Bestandteil a)] 1 oder mehr Alfol$_{6 \text{ bis } 10 \text{ C}}$"-phthalat(e) enthalten.

3. Weichmacher nach Anspruch 1 oder 2, dadurch gekennzeichnet, dass das Gewichtsverhältnis von a) zu b) 60:40 bis 70:30 oder 40:60 bis 20:80 ist.

4. Weichmacher nach den Ansprüchen 1 bis 3, dadurch gekennzeichnet, dass sie als anderen Weichmacher Diisooctylphthalat enthalten.

5. Verwendung der Weichmacher nach den Ansprüchen 1 bis 4 zur Herstellung von von −50 bis +105° C temperaturbeständigen weichmacherhaltigen Folien und Überzugsmaterialien auf Polyvinylchloridbasis durch Zugabe von 1 oder mehr der ersteren, gegebenenfalls neben 1 oder mehr anderen Weichmacher(n), zu, gegebenenfalls modifiziertem, Polyvinylchlorid.

6. Verwendung nach Anspruch 5, dadurch gekennzeichnet, dass man den beziehungsweise die Weichmacher zum, gegebenenfalls modifizierten, Polyvinylchlorid in Mengen von insgesamt 15 bis 55 Gew.-% zugibt.

7. Verwendung nach Anspruch 5 oder 6, dadurch gekennzeichnet, dass man als anderen Weichmacher Diisooctylphthalat einsetzt.

8. Verwendung nach den Ansprüchen 5 bis 7, dadurch gekennzeichnet, dass man als modifiziertes Polyvinylchlorid ein solches, welches mit Polychloräthylen modifiziert ist, einsetzt.

9. Von −50 bis +150° C temperaturbeständige weichmacherhaltige Folien und Überzugsmaterialien auf Polyvinylchloridbasis, gekennzeichnet durch einen Gehalt an 1 oder mehr Weichmacher(n) nach den Ansprüchen 1 bis 4.

## Claims

1. Plasticizers for polyvinyl chloride, optionally modified, having a content of phthalates of alcohols of the oxosynthesis, characterized in that they contain

beyond a) 1 or more phthalate(s) of alcohols of the oxosynthesis having from 6 to 10 carbon atoms

also b) ditridecyl phthalate and/or diisotridecyl phthalate

in mixture with each other in weight ratios of a) to b) of 5:95 to 95:5, optionally together with 1 or more other plasticizer(s).

2. Plasticizers according to claim 1, characterized in that they contain as a phthalate(s) of alcohols of the oxosynthesis having from 6 to 10 carbon atoms [component a)] 1 or more Alfol$_{6 \text{ to } 10 \text{ C}}$"-phthalate(s).

3. Plasticizers according to claim 1 or 2, characterized in that the weight ratio of a) to b) is 60:40 to 70:30 or 40:60 to 20:80.

4. Plasticizers according to claims 1 to 3, characterized in that they contain as another plasticizer diisooctyl phthalate.

5. The use of the plasticizers according to claims 1 to 4 for the production of sheets containing plasticizer and coating materials on the basis of polyvinyl chloride temperature resistant from −50 to +105° C by the addition of 1 or more of the former, optionally together with 1 or more other plasticizer(s), to polyvinyl chloride, optionally modified.

6. The use according to claim 5, characterized in that one adds the plasticizer(s) to the polyvinyl chloride, optionally modified, in amounts of all together from 15 to 55% by weight.

7. The use according to claim 5 or 6, characterized in that one employs as another plasticizer diisooctyl phthalate.

8. The use according to claims 5 to 7, characterized in that one employs as a modified polyvinyl chloride one which has been modified by polychloroethylene.

9. Sheets containing plasticizer and coating materials on the basis of polyvinyl chloride temperature resistant from −50 to +105° C, characterized by a content of 1 or more plasticizer(s) according to claims 1 to 4.

## Revendications

1. Plastifiants pour chlorure de polyvinyle éventuellement modifié, contenant des phtalates d'alcools d'oxosynthèse, caractérisés en ce qu'ils contiennent:

outre a) un ou plusieurs phtalates d'alcools d'oxosynthèse contenant 6 à 10 atomes de carbone,

également b) du phtalate de ditridécyle et/ou du phtalate de diisotridécyle,

en mélange entre eux en des rapports de poids a): b) compris entre 5:95 et 95:5, éventuellement en même temps qu'un ou plusieurs autres plastifiants.

2. Plastifiants selon la revendication 1, caractérisés en ce que, comme phtalates d'alcools d'oxosynthèse contenant 6 à 10 atomes de carbone [constituant a)], ils contiennent un ou plusieurs phtalates d'Alfol$_{6 \text{ à } 10 \text{ C}}$".

3. Plastifiants selon l'une quelconque des revendications 1 ou 2, caractérisés en ce que le rapport de poids a): b) est compris entre 60:40 et 70:30 ou entre 40:60 et 20:80.

4. Plastifiants selon l'une quelconque des revendications 1 à 3, caractérisés en ce qu'ils contiennent comme autre plastifiant du phtalate de diisooctyle.

5. Utilisation des plastifiants selon les revendications 1 à 4 pour la fabrication de feuilles et matières de revêtement à base de chlorure de polyvinyle contenant du plastifiant, par addition d'un ou plusieurs des premiers, éventuellement en même temps qu'un ou plusieurs autres plastifiants, à du chlorure de polyvinyle éventuellement modifié.

6. Utilisation selon la revendication 5, caractérisée en ce que l'on ajoute le ou les plastifiants au chlorure de polyvinyle éventuellement modifié, à raison de 15 à 55% en poids au total.

7. Utilisation selon l'une quelconque des revendications 5 ou 6, caractérisée en ce que, comme autre plastifiant, on utilise le phtalate de diisooctyle.

8. Utilisation selon l'une quelconque des revendications 5 à 7, caractérisée en ce que, comme chlorure de polyvinyle modifié, on utilise un produit qui est modifié par le polyéthylène.

9. Feuilles et matières de revêtement à base de chlorure de polyvinyle contenant du plastifiant et thermiquement stables de −50 à +150° C, caractérisées par une teneur en un ou plusieurs plastifiants selon l'une quelconque des revendications 1 à 4.

Fig. 1

Fig. 2

$\frac{l_1 - l_{1add}}{l_1}$ [%]

$\frac{l_2 - l_{2add}}{l_2}$ [%]

Ursprünglicher Zustand

Nach der Hitzealterung

Alfol® 610-phthalat [%]

Ditridecylphthalat [%]

0 057 470

Fig. 3